# FASCICULE DE BREVET EUROPEEN

(11) **EP 3 073 361 B1**
(45) Date de publication et mention de la délivrance du brevet: **04.07.2018**
(21) Numéro de dépôt: 16162463.0
(22) Date de dépôt: 25.03.2016
(51) Int. Cl.: G06F 3/0482, G06F 3/0488, H04M 1/00

(54) **PROCÉDÉ D'ACCÈS RAPIDE À DES FONCTIONNALITÉS D'APPLICATION**
SCHNELLZUGANGSVERFAHREN ZU APP-FUNKTIONEN
METHOD FOR QUICK ACCESS TO APPLICATION FUNCTIONALITIES

(30) Priorité: 27.03.2015 FR 1552608
(43) Date de publication de la demande: 28.09.2016
(73) Titulaire: Orange, 75015 Paris (FR)
(72) Inventeur: FLOURY, Cédric, 22700 Perros Guirec (FR)

(56) Documents cités:
- US-A1- 2010 299 638
- US-A1- 2013 326 421
- US-A1- 2015 040 065

## Description

### DOMAINE TECHNIQUE

L'invention se rapporte au domaine des interfaces utilisateurs et concerne plus particulièrement un procédé permettant d'accélérer l'accès à certaines données d'un terminal.

### ART ANTÉRIEUR

Les technologies de communication connaissent une évolution très rapide ces dernières années. Les terminaux mobiles connectés en particulier, comme par exemple les téléphones intelligents dits smartphones, se sont démocratisés et occupent aujourd'hui une place centrale dans la vie de leurs utilisateurs. Les utilisateurs sont joignables à tout instant selon différentes modalités et partagent toutes sortes d'informations avec d'autres, où et quand ils le désirent.

L'utilisation du smartphone occupe une grande partie du temps de leurs propriétaires car ses usages sont très variés : internet, communications, agenda, lecture, photo, vidéo, télévision, jeux, ... Ces terminaux sont évolutifs et offrent la possibilité à leurs utilisateurs d'ajouter de nouvelles fonctionnalités par le téléchargement et l'installation de programmes adaptés appelés « applications ». Une application est classiquement représentée par une icône affichée sur un écran du terminal et exécutée lorsque l'icône correspondante est sélectionnée. Ainsi, un smartphone doit offrir une interface particulièrement efficace permettant aux utilisateurs d'accéder rapidement à une information ou à une fonctionnalité parmi l'ensemble des données dont il dispose.

Dans ce but, une grande majorité des smartphones du marché sont dotés d'une interface utilisateur de type écran tactile. Une interface tactile est particulièrement avantageuse sur ce type d'appareil car permet de limiter l'usage de boutons physiques au profit d'écrans plus grands et promet une expérience utilisateur extrêmement intuitive. Les utilisateurs peuvent ainsi interagir avec leurs terminaux par de simples gestes effectués avec un ou plusieurs doigts sur l'écran.

Afin de réduire encore les interactions nécessaires pour accéder à certaines fonctionnalités, la plupart des systèmes d'exploitation pour terminaux mobiles de type smartphone permettent en outre de réorganiser les icones de lancement d'application sur l'écran de manière à ce que les utilisateurs puissent mettre en évidence et rendre accessible immédiatement les fonctions qu'ils utilisent le plus fréquemment. D'autre part, les applications utilisent fréquemment des raccourcis du type « favoris » ou « derniers éléments consultés » afin d'optimiser l'accès aux fonctions qu'elles recèlent. Par exemple, les navigateurs internet incluent depuis longtemps un système de marque-page pour que les utilisateurs puissent accéder directement à leurs sites internet favoris. De même, les applications de téléphonie peuvent inclure un journal d'appel pour accéder aux numéros récemment utilisés ou encore un système de contacts favoris pouvant éventuellement être constitué automatiquement par une observation de la fréquence d'utilisation des numéros. L'accès à ces éléments favoris peut toutefois s'avérer laborieux car l'application concernée doit d'abord être lancée pour y accéder. Ceci est consommateur en temps et en ressources énergétiques du terminal.

On peut noter que, dans ce dernier cas, la fonction téléphonie étant un élément central dans un terminal de communication, la gestion du carnet d'adresse et des contacts favori est parfois directement intégrée dans le système d'exploitation et accessible de façon immédiate via un bouton ou une icône dédiée. De cette façon, il est possible d'établir une communication avec un correspondant via un minimum d'actions. Malgré tout, cette manière de faire ne peut pas aujourd'hui être généralisée sans préjudice à l'ergonomie du terminal.

Ainsi, il existe bien un besoin pour une solution permettant d'accéder rapidement et de façon ergonomique à des données ou des fonctions relatives à différentes applications.

US 2010/0299638 divulgue un procédé d'accès rapide à des fonctionnalités d'application sur un terminal comprenant un écran tactile et comprenant les étapes suivantes :
Détection d'un geste réalisé par le déplacement d'un point de contact sur l'écran du terminal,
Affichage, selon un critère de sélection prédéfini, d'un ensemble d'éléments d'accès rapide à des fonctions de l'application,
Détection d'un second geste,
Affichage, selon un critère de sélection prédéfini, d'un second ensemble d'éléments d'accès rapide à des fonctions de l'application,
Activation de la fonction correspondante lorsqu'un élément d'accès rapide est sélectionné.

### RÉSUMÉ DE L'INVENTION

Un procédé d'accès rapide à des fonctionnalités d'application sur un terminal comprenant un écran tactile caractérisé en ce qu'il comprend les étapes suivantes :
- Détection d'un geste réalisé par le déplacement d'un point de contact sur l'écran du terminal, dont l'origine est située à un emplacement sur l'écran où est affichée une icône de lancement d'une application,
- Affichage, selon un critère de sélection prédéfini, d'en ensemble d'éléments d'accès rapide à des fonctions de l'application, et
- Activation de la fonction correspondante lorsqu'un élément d'accès rapide est sélectionné.

Le geste effectué à partir de l'icône d'une application permet ainsi de déclencher l'affichage d'un ensemble d'éléments d'accès rapides relatifs à cette application. Le geste est pris en compte lorsqu'il s'agit d'un déplacement d'un contact avec l'écran, par exemple le déplacement d'un doigt ou d'un objet adapté sur l'écran avec comme point de départ une icône d'application. De cette façon, il est possible de différencier une action de lancement de l'application d'un geste déclenchant l'affichage des éléments d'accès rapide. Un tel geste ayant pour point de départ l'icône d'une application de communication peut déclencher l'affichage de boutons associés à des entrées particulières d'un carnet d'adresses. L'utilisateur peut alors, par une action sur l'un de ces boutons, déclencher l'établissement d'une communication avec le correspondant associé. Selon un autre exemple, un geste ayant pour origine l'icône de lancement d'une application de photographie peut faire apparaitre de la même manière un aperçu des dernières photos capturées par le terminal, une action sur l'aperçu permettant alors de déclencher l'affichage de la photo en grand format. Ces exemples ne sont pas limitatifs et l'application peut s'appliquer à de nombreux types d'application comme par exemple un navigateur web, un agenda, une application de messagerie...

Une seule action simple permet d'avoir accès rapidement à un élément d'accès aux fonctions de l'application : le nombre d'actions limité pour accéder à une fonction permet un gain de temps qui se traduit par une consommation de ressources moindre sur le terminal et une économie d'énergie.

D'autre part, le procédé peut s'impliquer à un grand nombre d'applications. Les éléments affichés sont relatifs à l'application visée par l'origine du geste, ce qui permet une lisibilité plus facile en évitant une pollution visuelle par des informations concernant d'autres applications.

Les éléments d'accès rapide affichés suite à la détection du geste sont sélectionnés selon un critère prédéfini tel que par exemple un historique ou une fréquence d'utilisation de l'application. Le critère de sélection peut également comprendre, selon une réalisation particulière du procédé, une localisation géographique du terminal ou un réseau particulier sur lequel le terminal est connecté de façon à proposer par exemple des éléments d'accès rapides relatifs à des entrées d'un carnet d'adresses d'entreprise lorsque le terminal est localisé sur un lieu de travail et des entrées d'un carnet d'adresses personnel lorsque le terminal est localisé au domicile de son utilisateur.

Selon un mode de réalisation particulier, le procédé est tel que le nombre d'éléments d'accès rapide affiché dépend de la distance de déplacement du point de contact. Le procédé propose ainsi de mettre en relation le nombre d'éléments d'accès rapides avec la distance parcourue par le contact sur l'écran du terminal. Par exemple, lorsqu'un utilisateur réalise un geste court à partir de l'icône de lancement d'une application de communication, un petit nombre d'éléments d'accès rapide est affiché. En revanche, si le geste détecté est long, les éléments d'accès rapide sont affichés en plus grand nombre. Le procédé permet ainsi de limiter les interactions nécessaires à l'établissement de la communication lorsque le contact recherché est le premier élément d'accès rapide. A l'inverse, l'utilisateur peut poursuivre le geste de façon à faire apparaître davantage d'éléments d'accès rapide jusqu'à l'affichage de l'élément recherché.

Selon un mode particulier de réalisation, le procédé est tel que le geste est un déplacement vertical du point de contact sur l'écran.

L'affichage des éléments d'accès rapide est déclenché par un geste dont l'origine est l'icône de lancement d'une application et qui se poursuit par un déplacement vertical du contact avec l'écran. Ainsi, lorsqu'une icône d'application est par exemple positionnée en bas d'un écran, l'utilisateur peut effectuer un geste rectiligne vers le haut de l'écran afin de faire apparaître les éléments d'accès rapide. A l'inverse, si l'icône est située en haut de l'écran, l'utilisateur peut poursuivre le geste vers le bas de l'écran pour faire apparaître ces mêmes éléments. Ce mode réalisation du procédé permet avantageusement de clairement définir une zone située entre l'icône et la position de la fin du déplacement du point contact pour afficher les éléments d'accès rapide, le nombre d'éléments affichés pouvant dépendre de l'espace disponible pour afficher les éléments dans la zone. Par exemple, les éléments d'accès rapide peuvent être disposés en une colonne dont la hauteur correspond à la distance entre l'icône de l'application et la position du doigt d'un utilisateur -ou d'un quelconque objet de pointage adapté- sur l'écran.

Selon une réalisation particulière, l'invention est telle que le procédé comporte en outre les étapes suivantes :
- Détection d'un second geste réalisé consécutivement au premier geste, et
- Affichage, selon un critère de sélection prédéfini, d'un second ensemble d'éléments d'accès rapide à des fonctions de l'application.

Lorsque le nombre d'éléments d'accès affichés dépend de la longueur du déplacement du contact sur l'écran, Il peut arriver que la distance maximale pouvant être parcourue ne permette pas l'affichage d'un élément d'accès rapide recherché. Par exemple, si l'icône de lancement d'une application de communication est située au milieu de l'écran, la distance maximale qu'il est possible de parcourir en déplaçant un doigt verticalement depuis l'icône est limitée. De façon à autoriser l'affichage d'un plus grand nombre d'éléments d'accès rapide, l'invention propose qu'un second geste puisse être réalisé consécutivement au geste initial, le second geste lorsqu'il est détecté permettant d'afficher un second ensemble d'éléments d'accès rapide. Ce second geste peut par exemple correspondre à un déplacement horizontal du contact détecté sur l'écran consécutif au déplacement vertical ayant initialement déclenché l'affichage du premier ensemble d'éléments d'accès rapide. Lorsque ce déplacement horizontal est détecté, le terminal peut afficher par exemple sous la forme de colonnes supplémentaires, un nombre d'élément d'accès rapide additionnels proportionnel à la longueur du déplacement horizontal.

Selon un mode de réalisation particulier, le procédé est tel que la sélection des éléments d'accès rapide est réalisée selon un critère de fréquence d'utilisation desdits éléments.

Les éléments d'accès rapide affiché sont sélectionnés selon la fréquence d'utilisation des objets auxquels ils se rapportent. Par exemple, les entrées les plus utilisées d'un carnet d'adresses peuvent être sélectionnées et affichées par ordre de fréquence d'utilisation décroissant lorsqu'un geste partant de l'icône d'une application de communication est détecté. Ainsi, un geste très court permet d'afficher uniquement les éléments ayant la plus grande probabilité d'être utilisé par l'utilisateur.

Selon un mode particulier de réalisation, le procédé est tel que la sélection des éléments d'accès rapide est réalisée selon un critère relatif à la date de dernière utilisation des desdits éléments.

L'invention permet de cette façon un accès rapide aux derniers éléments consultés, utilisés ou produits. Par exemple, lorsque l'invention est associée à l'icône d'une application de photographie, l'utilisateur peut avantageusement accéder rapidement aux dernières photos prises ou encore, dans le cas d'un navigateur internet, aux dernières pages visitées.

Selon une réalisation particulière, le procédé est tel que les éléments d'accès rapide sont affichés au premier plan et en ce qu'un effet de flou est appliqué aux éléments graphiques de l'arrière-plan affichés précédemment.

L'application d'un effet graphique tel qu'un flou ou une désaturation sur les éléments affichés avant l'apparition des éléments d'accès rapide permet à ces éléments de se démarquer plus nettement de l'arrière-plan. En permettant à l'utilisateur de se focaliser sur les éléments d'accès, l'invention peut accélérer l'accès à la fonctionnalité recherchée.

Selon un autre aspect, l'invention concerne un dispositif d'accès rapide à des fonctionnalités d'application comme défini par la revendication 5. L'invention se rapporte aussi un terminal comprenant un dispositif d'accès rapide à des fonctionnalités d'application.

L'invention concerne également un programme d'ordinateur comportant les instructions pour l'exécution du procédé d'accès rapide, lorsque le programme est exécuté par un processeur. L'invention concerne aussi un support d'informations lisible par un processeur sur lequel est enregistré un programme d'ordinateur comprenant des instructions pour l'exécution des étapes du procédé d'accès rapide.

Les différents modes ou caractéristiques de réalisation précités peuvent être ajoutés indépendamment ou en combinaison les uns avec les autres, aux étapes du procédé d'accès rapide. Les terminaux, dispositifs, programmes et supports d'information présentent au moins des avantages analogues à ceux conférés par le procédé d'accès rapide décrit ci-dessus.

### LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- Les **figures 1a, 1b et 1c** illustrent une mise en oeuvre de l'invention sur un terminal selon un mode particulier de réalisation.
- La **figure 2** illustre les principales étapes du procédé d'accès rapide selon une réalisation particulière de l'invention,
- La **figure 3** représente de manière schématique un exemple d'architecture d'un dispositif adapté pour la mise en oeuvre du procédé d'accès rapide selon un mode de réalisation particulier de l'invention.

### DESCRIPTION DÉTAILLÉE

La **figure la** illustre un terminal 100 mettant en oeuvre la présente invention selon un mode particulier de réalisation. Il convient de noter ici que, bien que le terminal 100 illustré sur la figure corresponde ici à un terminal mobile de type smartphone, l'invention peut s'appliquer à tout type de terminal disposant d'un écran tactile, comme par exemple, et de façon non limitative, une tablette tactile, une liseuse électronique, une console de jeux, un terminal de contrôle d'une installation domotique, un équipement d'assistance à la conduite ou encore un ordinateur personnel.

Le terminal 100 comprend un écran tactile 101 adapté pour localiser sur l'écran des contacts avec un objet ou une partie du corps de l'utilisateur. Un écran de type capacitif ou résistif est par exemple adapté pour mettre en oeuvre l'invention.

Le terminal 100 comprend un processeur adapté pour exécuter un système d'exploitation et une ou plusieurs applications mémorisés dans une mémoire, comme par exemple une mémoire RAM (Random Access Memory) ou une mémoire Flash. De manière classique, un utilisateur du terminal 100 commande l'exécution d'une application en effectuant une action sur l'icône correspondante. Pour cela, le terminal interprète l'action de l'utilisateur en fonction de ce qui est affiché sur l'écran à l'emplacement où est effectuée l'action. Par exemple, un utilisateur du terminal 100 peut toucher l'écran à l'emplacement de l'icône 102 pour lancer une application de communication sur le terminal. Lorsque l'application est lancée, un utilisateur du terminal peut, toujours de manière classique, consulter un carnet d'adresses et déclencher l'établissement d'une communication avec un correspondant.

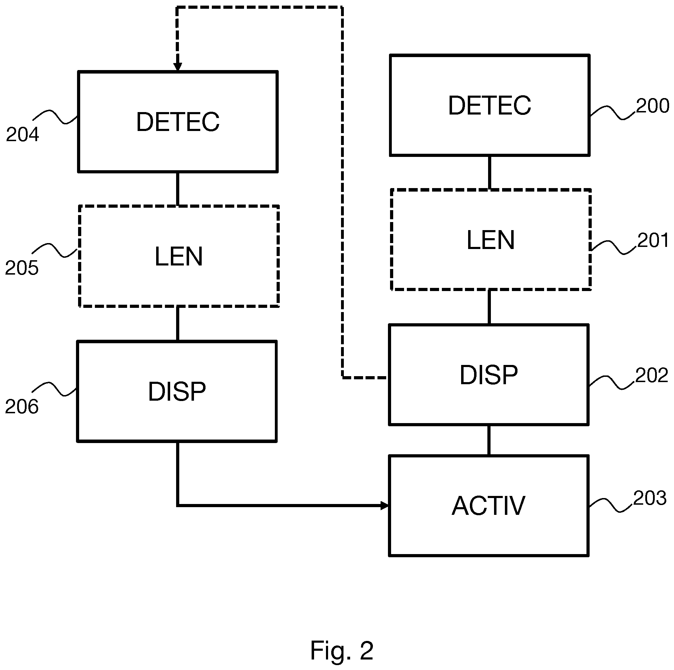

La **figure 2** illustre les principales étapes du procédé d'accès rapide. Lors d'une première étape 200, le terminal détecte un geste réalisé par un utilisateur, le geste consistant en un déplacement d'un point de contact sur l'écran du terminal à partir d'un emplacement sur l'écran où est affichée une icône de lancement d'une application. Par exemple, le terminal détecte que l'utilisateur place son doigt sur l'écran à l'emplacement de l'icône 102 et effectue un déplacement vers le haut de l'écran. Pour cela, le terminal combine des données fournies par l'écran tactile relatives à la position du point de contact sur l'écran et des données relatives à l'emplacement des icônes sur l'écran, ces dernières données pouvant être fournies par exemple par le système d'exploitation du terminal.

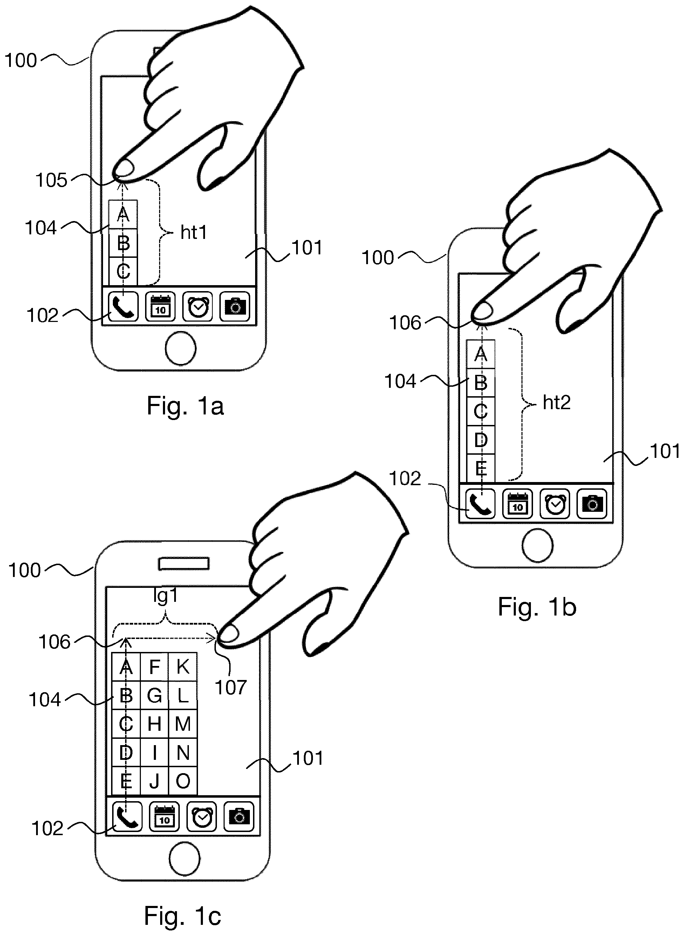

Une étape optionnelle 201 consiste à mesurer le déplacement du point de contact par rapport à sa position d'origine. Selon un mode de réalisation particulier, la mesure du déplacement correspond à la distance parcourue par le point de contact sur l'écran lors de son déplacement. Selon un mode de réalisation préféré, la mesure du déplacement correspond à la distance séparant la position initiale du point de contact et sa position au moment de la mesure. La distance peut être calculée en référence à un axe particulier, par exemple selon un axe vertical ou un axe horizontal ou bien être calculé selon deux axes. Par exemple, lorsque la mesure concerne un déplacement vertical du point de contact, la distance mesurée peut correspondre à la valeur absolue de la différence des coordonnées verticales au départ et à l'arrivée du déplacement du point de contact. Ainsi, en référence à la **figure 1a****,** la distance de déplacement du point de contact est notée ht1 et correspond à la distance entre la position de l'icône 102 sur l'écran et la position du point de contact 105.

À l'étape 202, le terminal réalise l'affichage d'un ensemble d'éléments d'accès rapide à des fonctionnalités de l'application, les éléments d'accès rapide affichés étant sélectionnés selon un critère prédéfini. Pour cela, le terminal détermine l'application concernée à partir de l'emplacement d'origine du geste et consulte par exemple une base de données dans laquelle sont mémorisées des fonctionnalités ou des données relatives à ladite application afin de sélectionner un sous ensemble de ces fonctionnalités ou données. Les fonctionnalités ou données sélectionnées peuvent ensuite être associées à des éléments d'interface utilisateur tels que des boutons ou des icônes et affichées sur l'écran du terminal, une action sur ces éléments d'interface utilisateur provoquant l'activation de la fonctionnalité ou l'affichage de la donnée associée. Par exemple, un bouton d'accès rapide peut être associé à une commande d'exécution de l'application assortie d'un paramètre faisant référence à la fonctionnalité ou à la donnée pour laquelle un accès rapide est sollicité, l'application étant adaptée pour interpréter ce paramètre automatiquement lors de son exécution. Ainsi, suite à la détection d'un geste réalisé sur le terminal 100 de la **figure 1a****,** depuis l'icône 102 associée à une application de communication jusqu'à l'emplacement 105, le terminal sélectionne trois entrées A, B et C dans un carnet d'adresses et associe ces trois entrées à des éléments d'interface utilisateur présentés sur l'écran du terminal. Selon un mode de réalisation particulier, les éléments d'accès rapide sont présentés dans une zone d'écran dont les dimensions sont en rapport avec le déplacement mesuré du point de contact. Par exemple, les éléments d'accès rapide peuvent être affichés dans une zone rectangulaire 104 dont la hauteur correspond à la distance verticale entre l'emplacement de l'icône et l'emplacement du point de contact sur l'écran.

Selon un mode de réalisation particulier, le nombre d'éléments d'accès rapide dépend de la distance de déplacement du point de contact. Par exemple, la **figure 1b** représente le terminal 100 après que le point de contact ait été déplacé à un emplacement 106. La distance verticale ht2 entre l'icône 102 et l'emplacement 106 du point de contact est supérieure à la distance ht1 représentée sur la **figure 1a** et deux nouveaux éléments d'accès rapide D et E correspondant à deux autres entrées du carnet d'adresses ont pu être affiché dans la zone 104. Le procédé permet ainsi à l'utilisateur de stopper son geste dès qu'un élément recherché est affiché de façon à réduire le temps d'accès à la fonctionnalité ou la donnée recherchée.

Selon une réalisation particulière, les éléments d'accès rapide affichés sont sélectionnés parmi un ensemble de données ou de fonctionnalités selon un critère de fréquence d'utilisation. Par exemple, les éléments d'accès rapides A, B et C représentés sur la **figure 1a** peuvent correspondre aux trois entrées les plus fréquemment utilisées dans le carnet d'adresses du terminal. De cette façon, la fonctionnalité ou la donnée avec la probabilité d'utilisation la plus haute est affichée en premier lieu.

Selon un mode particulier de réalisation, les éléments d'accès rapide affichés sont sélectionnés parmi un ensemble de données ou de fonctionnalités selon un critère chronologique. Par exemple, les éléments d'accès rapides A, B, C, D et E représentés sur la **figure 1b** peuvent correspondre aux cinq entrées les plus récemment utilisées dans le carnet d'adresses du terminal.

Ainsi, l'accès à une fonctionnalité fréquemment utilisée ou récemment utilisée ne nécessite qu'un geste court. Le procédé permet ainsi un gain de temps pour l'utilisateur et une économie de ressources pour le terminal.

Selon un mode particulier de réalisation, les éléments d'accès rapide sont sélectionnés selon un critère de localisation géographique. Pour cela, le terminal peut utiliser un composant de localisation tel qu'un GPS (global Positioning System) pour déterminer sa localisation géographique et déterminer par exemple si l'utilisateur se trouve à son domicile ou sur son lieu de travail. Ainsi, lorsque le terminal se trouve sur le lieu de travail de l'utilisateur, les éléments d'accès rapide peuvent être sélectionnés dans un carnet d'adresses professionnel associé au préalable par l'utilisateur à une localisation particulière. Ceci permet de limiter des manipulations consommatrices en temps et en énergie pour le terminal.

Selon un mode de réalisation particulier, un effet visuel est appliqué à l'arrière-plan lorsque les éléments d'accès rapides sont affichés. Par exemple, les icônes ou autres éléments graphiques affichés sur l'écran avant l'apparition des éléments d'accès rapide peuvent être rendus flous par application d'un effet de flou gaussien lorsque les éléments d'accès sont affichés. En mettant ainsi en évidence les éléments d'accès rapides par rapport à l'arrière-plan, les éléments d'accès rapide sont plus rapidement identifiables par l'utilisateur, ce qui permet de réduire encore le temps d'accès aux fonctions ou données de l'application.

À l'étape 203, le terminal détecte une action sur un élément d'accès rapide et active la fonction associée à cet élément. Par exemple, lorsque le terminal détecte une action sur l'élément d'accès rapide B de la **figure 1b****,** le terminal peut exécuter une commande provoquant l'établissement d'une communication vers le correspondant associé à cet élément. Le procédé permet de cette façon l'établissement d'une communication vers un correspondant à partir de gestes rapides et simples.

Selon une réalisation particulière, l'étape d'affichage 202 peut être suivie d'une étape optionnelle 204 de détection d'un second geste réalisé consécutivement au premier geste. Le second geste peut par exemple consister en un déplacement horizontal du point de contact réalisé dans la continuité du premier geste.

Le terminal peut évaluer la distance de déplacement du second geste lors d'une étape optionnelle 205. Pour cela, le terminal peut par exemple évaluer la distance horizontale parcourue lors du déplacement du point de contact en calculant par exemple l'écart entre la position du point contact au début du second geste et sa position au moment du calcul.

À l'étape 206, le terminal peut afficher au moins un nouvel élément d'accès rapide supplémentaire lorsqu'un second geste est détecté. Ce nouvel ensemble d'éléments est constitué à partir d'éléments d'accès à des fonctions ou des données de l'application déterminée par l'origine du premier geste, les éléments d'accès étant sélectionnés selon un critère prédéfini, comme par exemple un critère chronologique ou un critère relatif à la fréquence d'utilisation des fonctions ou données. Selon un mode de réalisation particulier, le nombre d'éléments d'accès compris dans le nouvel ensemble dépend de la distance de déplacement évaluée à l'étape 205. Le procédé permet ainsi d'afficher davantage d'éléments d'accès lorsque cela est nécessaire. En proposant davantage d'éléments d'accès rapide, le procédé permet de réduire le nombre de cas dans lesquels un utilisateur devra effectuer des manipulations plus complexes pour accéder à une fonctionnalité particulière non disponible parmi les éléments d'accès rapide.

La **figure 1c** représente le terminal 100 lorsque l'utilisateur réalise un second geste dans la continuité du premier geste. Un premier déplacement vertical d'un point de contact sur l'écran depuis l'emplacement d'affichage de l'icône 102 jusqu'à l'emplacement 106 provoque l'affichage d'un premier ensemble d'éléments d'accès rapide {A, B, C, D, E} comme représenté sur la **figure 1b****.** À partir de l'emplacement 106, l'utilisateur effectue alors un déplacement horizontal du point de contact vers l'emplacement 107. A la détection du second geste, le terminal affiche un nouvel ensemble d'éléments d'accès rapide, le nombre d'éléments du nouvel ensemble étant en relation avec la distance de déplacement du second geste. Par exemple, sur la **figure 1c****,** le déplacement du point de contact sur une distance lg1 provoque l'affichage de 10 éléments d'accès rapide supplémentaires {F, G, H, I, J K, L, M, N, O}.

Le procédé permet ainsi d'accéder à un nombre important d'éléments permettant d'accéder rapidement à des fonctions ou des données associées à une application particulière. De cette manière, le nombre d'interactions pour accéder à des fonctions ou des données peut être nettement réduit par rapport aux techniques actuelles, ce qui participe à économiser les ressources du terminal.

En particulier, lorsque les éléments d'accès rapide sont sélectionnés et ordonnés selon leur fréquence d'utilisation et/ou de façon chronologique, le temps d'accès à la fonction ou à la donnée correspondante est très limité. Bien entendu, d'autres directions du geste peuvent être appliquées et la séquence de changement de direction peut être inverse pour mettre en oeuvre l'invention.

Après l'apparition des éléments d'accès rapide, l'affichage initial peut être rétabli de différentes manières. Par exemple, les éléments d'accès rapide peuvent être masqués après l'expiration d'une période temporelle prédéterminée lorsqu'aucune action n'a été effectuée par l'utilisateur. Selon une réalisation particulière, les éléments peuvent être masqués lorsqu'une action est effectuée sur une zone de l'écran qui ne comporte pas d'éléments d'accès rapide.

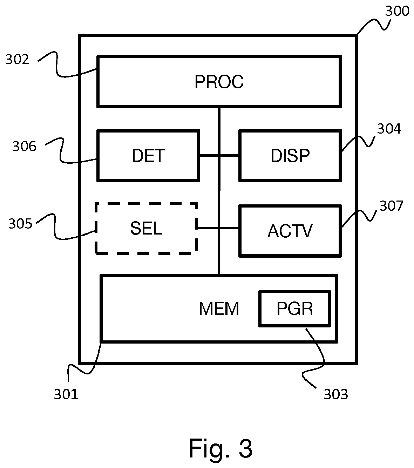

La **figure 3** illustre un dispositif 300 mettant en oeuvre le procédé d'accès rapide, selon un mode particulier de réalisation de l'invention. Le dispositif comprend un espace de stockage 301, par exemple une mémoire MEM, une unité de traitement 302 équipée par exemple d'un processeur PROC. L'unité de traitement peut être pilotée par un programme 303, par exemple un programme d'ordinateur PGR, mettant en oeuvre le procédé d'accès rapide tel que décrit dans l'invention en référence aux figures 1 et 2, et notamment les étapes de détection d'un geste réalisé par le déplacement d'un point de contact sur l'écran du terminal, dont l'origine est située à un emplacement sur l'écran où est affichée une icône de lancement d'une application, d'affichage, selon un critère de sélection prédéfini, d'un ensemble d'éléments d'accès rapide à des fonctions de l'application, et d'activation de la fonction correspondante lorsqu'un élément d'accès rapide est sélectionné.

À l'initialisation, les instructions du programme d'ordinateur 303 (PGR) sont par exemple chargées dans une mémoire RAM (Random Access Memory en anglais) avant d'être exécutées par le processeur de l'unité de traitement 302. Les instructions du programme peuvent également être mémorisées sur un support de stockage tel qu'une mémoire flash, un disque dur ou tout autre support de stockage non-transitoire. Le processeur de l'unité de traitement 302 met en oeuvre les étapes du procédé d'accès rapide selon les instructions du programme d'ordinateur 303.

Pour cela, le dispositif comprend, outre la mémoire 301, un module d'affichage 304 (DISP) permettant au dispositif d'afficher des éléments graphiques, et en particulier d'afficher des éléments d'accès rapide. Le dispositif comprend également une unité de détection 306 (DET) d'un point de contact sur l'écran, comme par exemple une dalle tactile adaptée pour détecter un contact entre un objet ou une partie du corps et la dalle tactile. Selon une réalisation particulière, l'unité de détection et l'unité d'affichage sont combinées sous la forme d'un écran tactile par exemple. Selon une réalisation particulière, le dispositif comprend également une unité de sélection, selon un critère prédéterminé, d'un ensemble d'un ensemble d'éléments d'accès rapides à afficher. En particulier, l'unité de sélection est adaptée pour déterminer les fonctions ou les données d'une application selon un critère de fréquence d'utilisation. Le dispositif comprend en outre une unité d'activation 307 (ACTV) adaptée pour activer l'exécution d'une fonction ou l'affichage d'une donnée lorsqu'un élément d'accès rapide est sélectionné par un utilisateur.

Selon un mode particulier de réalisation, le dispositif peut être intégré dans un terminal de type smartphone, une tablette tactile, un ordinateur personnel, un centre de contrôle d'une installation domotique, un ordinateur de bord dans un véhicule ou encore un module de guidage de type GPS (global Positioning System).

## Revendications

1. Procédé d'accès rapide à des fonctionnalités d'application sur un terminal comprenant un écran tactile **caractérisé en ce qu'**il comprend les étapes suivantes :
- Détection (200) d'un premier geste réalisé par un déplacement vertical ou horizontal d'un point de contact sur l'écran tactile du terminal, dont l'origine est située à un emplacement sur l'écran tactile où est affichée une icône de lancement d'une application,
- Affichage (202), selon un critère de sélection prédéfini, d'un premier ensemble d'éléments d'accès rapide à des fonctionnalités de l'application, de sorte que le nombre d'éléments du premier ensemble est en relation avec la distance de déplacement du point de contact,
- Détection (204) d'un second geste dans la continuité du premier geste, réalisé par un déplacement du point de contact dans une direction perpendiculaire au déplacement du premier geste,
- Affichage (206), selon un critère de sélection prédéfini, d'un second ensemble d'éléments d'accès rapide à des fonctionnalités de l'application, le nombre d'éléments du second ensemble étant fonction des longueurs des premiers et seconds gestes, et
- Activation (203) de la fonctionnalité correspondante lorsqu'un élément d'accès rapide est sélectionné.

2. Procédé selon la revendication 1 **caractérisé en ce que** la sélection des éléments d'accès rapide est réalisée au moins selon un critère de fréquence d'utilisation desdits éléments.

3. Procédé selon l'une des revendications précédentes **caractérisé en ce que** la sélection des éléments d'accès rapide est réalisée au moins selon un critère relatif à la date de dernière utilisation des desdits éléments.

4. Procédé selon l'une des revendications précédentes **caractérisé en ce que** les éléments d'accès rapide sont affichés au premier plan et **en ce qu'**un effet de flou est appliqué aux éléments graphiques de l'arrière-plan affichés précédemment.

5. Dispositif d'accès rapide à des fonctionnalités d'application comprenant un écran tactile **caractérisé en ce qu'**il comporte:
- Une unité de détection (306) adaptée pour détecter un premier geste réalisé par un déplacement vertical ou horizontal d'un point de contact sur l'écran tactile du terminal, dont l'origine est située à un emplacement sur l'écran tactile où est affichée une icône de lancement d'une application, et un second geste réalisé dans la continuité du premier geste, par un déplacement du point de contact dans une direction perpendiculaire au déplacement du premier geste,
- Un afficheur (304) adapté pour afficher un premier ensemble d'éléments d'accès rapide à des fonctionnalités de l'application selon un critère de sélection prédéfini de sorte que le nombre d'éléments du premier ensemble est en relation avec la distance de déplacement du point de contact lors du premier geste, l'afficheur étant en outre adapté pour afficher un second ensemble d'éléments d'accès rapide à des fonctionnalités de l'application, le nombre d'éléments du second ensemble étant fonction des longueurs des premiers et seconds gestes, et
- Une unité d'activation de la fonctionnalité correspondante lorsqu'un élément d'accès rapide est sélectionné.

6. Terminal **caractérisé en ce qu'**il comporte un dispositif d'accès rapide selon la revendication 5.

7. Programme d'ordinateur comportant les instructions pour l'exécution du procédé d'accès rapide selon l'une quelconque des revendications 1 à 4, lorsque le programme est exécuté par un processeur.

8. Support d'informations lisible par un processeur sur lequel est enregistré un programme d'ordinateur comprenant des instructions pour l'exécution des étapes du procédé d'accès rapide selon l'une quelconque des revendications 1 à 4.

## Patentansprüche

1. Verfahren für den Schnellzugriff auf Anwendungsfunktionen auf einem Endgerät, das einen Touchscreen enthält, **dadurch gekennzeichnet, dass** es die folgenden Schritte enthält:
- Erfassung (200) einer ersten Geste ausgeführt durch eine senkrechte oder waagrechte Verschiebung eines Kontaktpunkts auf dem Touchscreen des Endgeräts, dessen Ursprung sich an einer Stelle auf dem Touchscreen befindet, wo ein Start-Icon einer Anwendung angezeigt ist,
- Anzeige (202), gemäß einem vordefinierten Auswahlkriterium, einer ersten Einheit von Schnellzugriffselementen auf Funktionen der Anwendung, so dass die Anzahl von Elementen der ersten Einheit mit der Verschiebestrecke des Kontaktpunkts in Verbindung steht,
- Erfassung (204) einer zweiten Geste in Kontinuität mit der ersten Geste, die durch eine Verschiebung des Kontaktpunkts in einer Richtung lotrecht zur Verschiebung der ersten Geste durchgeführt wird,
- Anzeige (206), gemäß einem vordefinierten Auswahlkriterium, einer zweiten Einheit von Schnellzugriffselementen auf Funktionen der Anwendung, wobei die Anzahl von Elementen der zweiten Einheit von den Längen der ersten und zweiten Gesten abhängt, und
- Aktivierung (203) der entsprechenden Funktion, wenn ein Schnellzugriffselement ausgewählt wird.

2. Verfahren nach Anspruch 1, **dadurch gekennzeichnet, dass** die Auswahl der Schnellzugriffselemente mindestens gemäß einem Kriterium der Nutzungshäufigkeit der Elemente durchgeführt wird.

3. Verfahren nach einem der vorhergehenden Ansprüche, **dadurch gekennzeichnet, dass** die Auswahl der Schnellzugriffselemente mindestens gemäß einem Kriterium bezüglich des Datums der letzten Nutzung der Elemente durchgeführt wird.

4. Verfahren nach einem der vorhergehenden Ansprüche, **dadurch gekennzeichnet, dass** die Schnellzugriffselemente im Vordergrund angezeigt werden, und dass ein Unschärfeeffekt an die grafischen Elemente des Hintergrunds angewendet wird, die vorher angezeigt wurden.

5. Vorrichtung für den Schnellzugriff auf Anwendungsfunktionen, die einen Touchscreen enthält, **dadurch gekennzeichnet, dass** sie aufweist:
- eine Erfassungseinheit (306), die geeignet ist, eine erste Geste, die durch eine senkrechte oder waagrechte Verschiebung eines Kontaktpunkts auf dem Touchscreen des Endgeräts durchgeführt wird, dessen Ursprung sich an einer Stelle auf dem Touchscreen befindet, wo ein Start-Icon einer Anwendung angezeigt ist, und eine zweite Geste zu erfassen, die in der Kontinuität der ersten Geste durch eine Verschiebung des Kontaktpunkts in einer Richtung lotrecht zur Verschiebung der ersten Geste durchgeführt wird,
- einen Anzeiger (304), der geeignet ist, eine erste Einheit von Schnellzugriffselementen auf Funktionen der Anwendung gemäß einem vordefinierten Auswahlkriterium anzuzeigen, so dass die Anzahl von Elementen der ersten Einheit mit dem Verschiebestrecke des Kontaktpunkts bei der ersten Geste in Verbindung steht, wobei der Anzeiger außerdem geeignet ist, eine zweite Einheit von Schnellzugriffselementen auf Funktionen der Anwendung anzuzeigen, wobei die Anzahl von Elementen der zweiten Einheit von den Längen der ersten und zweiten Gesten abhängt, und
- eine Aktivierungseinheit der entsprechenden Funktion, wenn ein Schnellzugriffselement ausgewählt wird.

6. Endgerät, **dadurch gekennzeichnet, dass** es eine Schnellzugriffsvorrichtung nach Anspruch 5 aufweist.

7. Computerprogramm, das die Anweisungen zur Ausführung des Schnellzugriffsverfahrens nach einem der Ansprüche 1 bis 4 aufweist, wenn das Programm von einem Prozessor ausgeführt wird.

8. Prozessor-lesbarer Datenträger, auf dem ein Computerprogramm gespeichert ist, das Anweisungen zur Ausführung der Schritte des Schnellzugriffsverfahrens nach einem der Ansprüche 1 bis 4 enthält.

## Claims

1. Method for quick access to application functionalities on a terminal comprising a touchscreen **characterized in that** it comprises the following steps:
- Detection (200) of a first gesture performed by a vertical or horizontal movement of a point of contact over the touchscreen of the terminal, whose origin is situated at a location on the touchscreen where an icon for launching an application is displayed,
- Displaying (202), according to a predefined selection criterion, of a first set of elements for quick access to functionalities of the application, such that the number of elements of the first set relates to the distance of movement of the point of contact,
- Detection (204) of a second gesture as a continuation of the first gesture, performed by a movement of the point of contact in a direction perpendicular to the movement of the first gesture,
- Displaying (206), according to a predefined selection criterion, of a second set of elements for quick access to functionalities of the application, the number of elements of the second set being a function of the lengths of the first and second gestures, and
- Enabling (203) of the corresponding functionality when a quick access element is selected.

2. Method according to Claim 1 **characterized in that** the selection of the quick access elements is made at least according to a criterion of frequency of use of said elements.

3. Method according to either of the preceding claims **characterized in that** the selection of the quick access elements is made at least according to a criterion relating to the date of last use of said elements.

4. Method according to one of the preceding claims **characterized in that** the quick access elements are displayed in the foreground and **in that** a blurring effect is applied to the graphics elements of the background previously displayed.

5. Device for quick access to application functionalities comprising a touchscreen, **characterized in that** it comprises:
- A detection unit (306) designed to detect a first gesture performed by a vertical or horizontal movement of a point of contact over the touchscreen of the terminal, whose origin is situated at a location on the touchscreen where an icon for launching an application is displayed, and a second gesture performed as a continuation of the first gesture, performed by a movement of the point of contact in a direction perpendicular to the movement of the first gesture,
- A display device (304) designed to display a first set of elements for quick access to functionalities of the application according to a predefined selection criterion, such that the number of elements of the first set relates to the distance of movement of the point of contact during the first gesture, the display device furthermore being designed to display a second set of elements for quick access to functionalities of the application, the number of elements of the second set being a function of the lengths of the first and second gestures, and
- A unit for enabling the corresponding functionality when a quick access element is selected.

6. Terminal **characterized in that** it comprises a quick access device according to Claim 5.

7. Computer program comprising the instructions for the execution of the quick access method according to any one of Claims 1 to 4, when the program is executed by a processor.

8. Information medium readable by a processor on which a computer program is recorded that comprises instructions for the execution of the steps of the quick access method according to any one of Claims 1 to 4.
